# EUROPEAN PATENT SPECIFICATION

(11) **EP 0 980 752 B1**
(45) Date of publication and mention of the grant of the patent: **26.05.2004**
(21) Application number: 99121947.8
(22) Date of filing: 04.06.1993
(51) Int. Cl.: B32B 27/08, B32B 31/30, B29C 55/26, B29C 55/28

(54) **Heat shrinkable film containing polyamide/copolyamide blends**
Polyamide/Copolyamide-Mischungen enthaltende wärmeschrumpfbare Folie
Feuille thermorétractable contenant des mélanges de polyamide/copolyamide

(30) Priority: 05.06.1992 US 893638
(43) Date of publication of application: 23.02.2000
(62) Divisional of application: 93304366.3
(73) Proprietor: Cryovac, Inc., Duncan, S.C. 29334-0464 (US)
(72) Inventor: Ahlgren, Kelly R., Greenville,SC 29615 (US); Ramesh, Ram K., Greer,SC 29650 (US)
(74) Representative: Senior, Alan Murray

(56) References cited:
- EP-A- 0 149 321
- EP-A- 0 269 325
- EP-A- 0 331 509
- EP-A- 0 386 759
- EP-A- 0 451 977
- US-A- 4 888 223

## Description

The present invention relates generally to a process for producing heat shrinkable biaxially oriented multilayer films and bags which are primarily olefinic but which contain at least one layer of a polyamide/copolyamide blend. More particularly, the present invention relates to a process from producing heat shrinkable, polyamide containing structures which are shirred for use in the meat packing industry in cook-in applications.

U.S. Patent No. 4,606,922 discloses a cook-in film which may be optionally biaxially oriented for heat shrinkability. Nylon 6 is employed in the non-shrinkable embodiment.

U.S. Patent No. 5,079,051 is directed to an oriented, heat shrinkable packaging film having a layer of a polyamide or a polyester.

U.S. Patent No. 4,501,798 is directed to a multiple layer polymeric film having a surface layer which may be nylon-6. A process for a uniaxially orienting the film is disclosed.

U.S. Patent No. 4,944,970 is directed to a tubular, biaxially stretch oriented packaging film which includes a polymer mixture of an aliphatic polyamide, a polyterephthalic acid ester, and an aromatic polyamide.

U.S. Patent No. 4,851,245 is directed to a smokable, synthetic food packaging film which includes at least one layer of a mixture of a polyamide and an ethylene vinyl alcohol.

U.S. Patent No. 4,659,599 is directed to a tubular packaging film which includes a polymer mixture of a polyamide and a polyterephthalic acid ester.

U.S. Patent No. 5,094,799 is directed to a process for producing biaxially oriented nylon film wherein orientation of monolayer nylon-6 is achievable through specific regulation of various process parameters.

U.S. Patent No. 4,098,860 is directed to the production of biaxially drawn film of a blend of an aliphatic polyamide and a xylylene containing polyamide.

U.S. Patent No. 4,120,928 discloses the process for preparing a biaxially stretched film of a polyamide or a blend of polyamides.

U.S. Patent No. 5,106,693 is directed to a transparent, gas barrier, multilayer structure having at least one layer of a polyamide composition which is a blend of a first polyamide composed of a homopolyamide or copolyamide of an aromatic dicarboxylic acid as a main acid component and a hexamethylene diamine as a main diamine component and a second polyamide which is a homopolyamide or copolyamide of an adipic dicarboxylic acid as the main acid component and an m-xylylenediamine as the main diamine component.

U.S. Patent No. 4,486,507 is directed to a shrinkable film having at least one layer which is a mixture of a linear polyamide, linear copolyamide, or an elastomeric component and a partially aromatic polyamide or partially aromatic copolyamide.

U.S. Reissue 30,390 is directed to an apparatus and method for producing a food product and more particularly, to an apparatus and method for controlling the uniformity of stuffed diameter and confirmation of the terminal ends of a sausage product. Primarily disclosed are cellulosic casings.

U.S. Patent No. 5,085,890 is directed to a method for making indicia containing processed food products employing indicia casings which are filled with processable food to which the color indicia is transferred during processing. The casings disclosed are manufactured from cellulose.

U.S. Patent No. 4,855,183 is directed to a multiple layer cook-in film from which packages such as bags or casings can be made. The films have a first food contact layer that bindingly adheres during cook-in to a contained meat product of a polyamide or a blend containing a polyamide.

U.S. Patent No. 4,495,751 is directed to an apparatus and method for packaging articles in a flexible wrapping material. An in-line method for shirring and stuffing polymeric tubing is disclosed.

As is disclosed in the '751 patent, techniques are known for the automatic and semi-automatic filling of various types of casings with viscous meat emulsion. In general, these techniques include positioning a shirred continuous film casing length over a stuffing horn and thereafter continuously deshirring the casing and stuffing the deshirred casing with viscous meat emulsion fed under pressure through the stuffing horn and into the casing interior. As used in the art, the term "casing" or "tubular casing" generally means tubing of natural or manufactured materials. Natural casings are generally cellulosic. Shirring is the process by which lengths of the tubular material are folded or pleated into a relatively short length. Shirred tubular casings may be provided as "sticks" which are long lengths of casing having a substantially large bore which have been shirred and compressed into short, compact, self-sustaining lengths or which may be a package of shirred and compressed casing sheathed inside a retaining sleeve. Apparatus and processes are well known in the food casing art for producing shirred, tubular casings. Such apparatus may be employed in the preparation of pleated and compressed tubular casings wherein the compression ratios (unshirred to shirred stick length) are in the order of at least about 40:1 and up to about 100:1 or even greater. Using suitable food stuffing machinery, casing lengths can be stuffed and formed into unit size lengths of particulate or comminuted viscous material such as meat emulsions or the like.

During the shirring of polymeric tubing, mineral oil is often coated on the outer surface of the tubing as a processing aid. Specifically, the oil is employed to reduce flex cracking as the film is pleated. The mineral oil has no deleterious effect on the performance of the ultimate casing when the precursor polymeric tubing includes at least one layer of a gas barrier polymer such as ethylene vinyl alcohol. However, for packaging applications which do not require a gas barrier, the polyolefinic structure of conventional non-barrier polymeric casings results in product failure such as splitting during "cook-in".

Polymeric casings such as discussed in the present specification are desirable in that moisture is retained in the food product during "cook-in". The term "cook-in" as used herein is intended to refer to packaging materials structurally capable of withstanding exposure to cook-in time temperature conditions while containing a food product. Cook-in packaged foods include foods cooked in the package in which they are distributed to the consumer and which may be consumed with or without warming. Cook-in time temperature conditions typically refer to long, slow cook. For example submersion in hot water at 55 to 65°C for 1-4 hours is representative of institutional cook-in requirements. Submersion at 70°-100°C for up to about 12 hours probably represents the limiting case.

The food packaging industry needs a packaging film from which bags and casings can be made which are of improved structural soundness such that they may be fully characterized as cook-in. The packaging film must be substantially conformable to the contained food product. Preferably, this substantial conformability is achieved by the film being heat shrinkable under cook-in conditions so as to form a tightly fitting package. In other words, in an advantageous embodiment, the film is heat shrinkable under these time-temperature conditions, i.e. the film possesses sufficient shrink energy such that submerging the packaged food product in hot water will shrink the packaging film snugly around the contained product, representatively up to about 55% monoaxial or biaxial shrinkage but at least 5% shrinkage in at least one direction at 90°C.

Also, the film may desirably have food product adherence to restrict "cook-out" or collection of juices between the surface of the contained food product and the food contact surface of the packaging material during cook-in, thereby increasing product yield. More particularly, in the types of multilayer films wherein the first "food contact" layer is of the type of material that bindingly adheres to a contained food product during cook-in, this first layer may alternatively be referred to as the "adhering layer". As used herein, the term "adhere" is intended to mean that the food contact surface of the film bonds during cook-in to the contained food product to an extent sufficient to substantially prevent accumulation of fluids between the film and the contained product.

Additionally, the food contact layer may serve as a heat seal layer. However, any heat seal must be able to withstand standard cook conditions. Because of the difficulty of providing such a seal as well as, optionally, adhesion to the food product, and because of the preferred sausage-like shape which is desirable in the final food product, casings are often clipped rather than heat sealed.

In one conventional method of manufacturing heat shrinkable film, a tubular orientation process is utilized. The tubing may optionally be irradiated prior to or following orientation. A primary tube of the film is biaxially oriented by stretching with internal pressure in the transverse direction and with the use of pinch rolls at different speeds in the machine direction. Then the stretched bubble is collapsed, and the film is wound up as flattened, seamless, tubular film to use later to make casings, as described above, or bags, e.g. either end-seal bags typically made by transversely heat sealing across the width of flattened tubing followed by severing the tubing so that the transverse seal forms the bag bottom, or side-seal bags in which the transverse heat seals form the bag sides and one edge of the tubing forms the bag bottom.

Such bags are typically used by placing the food product in the bag, evacuating the bag, either heat-sealing the bag mouth or gathering and applying a metal clip around the gathered mouth of the bag to form a seal, and then immersing the bag in hot water at approximately the same temperature at which the film was stretch-oriented, typically about 160° to 205°F. (71° to 96°C), hot water immersion being one of the quickest and most economical means of transferring sufficient heat to the film to shrink it uniformly. Alternatively, the bag may serve as a liner of a cooking mold.

EP-A-0386759 discloses a process for producing biaxially oriented nylon films having maximal draw stress in both the machine and transverse directions from 500 to 1500 kg/cm². Specifically, films comprising nylon 6, nylon 66 or nylon 6-66 are disclosed.

EP-A-0331509 discloses a heat shrinkable laminated film comprising at least two layers, a mixed aliphatic polyamide layer and a mixed resin layer comprising a saponified ethylene-vinyl acetate copolymer as the main constituent.

The present invention provides a process for producing a heat shrinkable biaxially-oriented multilayer film,
comprising:
(a) extruding a tubular multilayer tape comprising:
   (i) a first, outer layer comprising a polyolefin,
   (ii) a second, core layer comprising a polyamide blend comprising nylon 6 blended with at least about 5% by weight of copolyamide,
   (iii) a third layer which is a core layer comprising polyolefin or an oxygen-barrier layer comprising at least one member selected from ethylene/vinyl alcohol copolymer, polyvinylidene chloride copolymer and polyacrylonitrile, and
   (iv) a fourth, outer layer comprising a polyolefin
   wherein the second polyamide layer comprises less than 15% of the total thickness of the structure; and
(b) inflating the tape so that the tape is biaxially oriented by stretching in a transverse direction and machine direction, so that a tubular multilayer film is formed.

The second layer of the film produced according to the invention preferably comprises at least one copolyamide selected from nylon 6/12, nylon 6/69 and nylon 66/610.

In the process of the invention biaxial orientation is preferably carried out at an orientation temperature from 71 to 138°C (160 to 280°F), more preferably from 71 to 96°C (160 to 205 °F). Preferably the tube is heated in hot water immediately before biaxial orientation.

In a general sense, the present invention is directed to a process for the provision of a biaxially orientated, heat shrinkable, thermoplastic film containing nylon 6, i.e. polycaprolactam. The prior art has shown that orientation of nylon 6 at high temperatures or high rates of speed is not feasible. For example, in a trapped bubble process such as described above, attempts to orient thermoplastic film containing nylon 6 out of boiling water or near boiling water temperature have failed because of bubble breakage, believed to be cause by the crystallization of nylon 6 at those temperatures.

In order to achieve such orientation, the prior art teaches orientation at low temperatures, low rates of speed, through special process designs, or by careful regulation of process parameters. In the present invention it has been found that thermoplastic films containing nylon 6 may be readily oriented in a conventional trapped bubble process by the addition at least 5% by weight of a copolyamide to the nylon 6. For purposes of the present invention, any copolyamide obtained by copolymerization of at least two different precursor polyamides is acceptable. Preferred copolyamides include nylon 6/12, nylon 6/69, and nylon 66/610.

The present invention is more particularly concerned with the provision of a heat shrinkable, non-barrier, shirrable, cook-in film. However, it should be noted that in addition to those resins traditionally considered as gas barriers, that is, ethylene vinyl alcohol, acrylonitriles, and vinylidene chloride copolymers such as vinylidene chloride/vinyl chloride, and vinylidene chloride/methyl acrylate, nylons are often considered to be gas barrier resins. The specific definition of a gas barrier will vary depending on the end-use application of the film in question. It is well known that the permeability of any polyamide film will decrease with increasing thickness. Thus, oriented nylon films in accordance with the present invention may be employed in gas barrier applications. Further, the present method for orienting nylon 6-containing films is applicable to films which also include a barrier such as EVOH as is shown in Examples 7 - 11, below. However, for purposes of the present embodiment, a non-barrier film is provided.

Specifically, in many cook-in applications a more expensive barrier structure containing typically EVOH, is not required. A less expensive, non-barrier film is often employed for cook and strip applications where the cook-in bag or casing is not retained for distribution of the product to the consumer. Such non-barrier materials are typically comprised of polyolefins and are often supplied to the meat packing industry in the form of shirred casings. As discussed above, mineral oil is often coated on the exterior of the thermoplastic tubing to aid in the shirring process. However, such oil adversely acts as a plasticizer on the polyolefinic film. For barrier applications, the film is typically protected from the oil by the gas barrier resin. However, for non-barrier applications, the plasticizing action of the mineral oil causes a high rate of product failure during cook-in.

It has been found in accordance with the present invention that a relatively thin layer of nylon 6 in a thickness insufficient for gas barrier properties, less than 15% of the total thickness of the structure, provides excellent oil resistance. However, it was found that even a minor amount of nylon 6 in an internal layer of a polyolefinic film causes difficulty in the orientation process, requiring lowering of the orientation temperature, slowing of the orientation speed, or both. However, lower orientation temperatures result in a less desirable product appearance and slow orientation rates are obviously undesirable from a manufacturing perspective.

Thus, it has been found in accordance with the present invention that the processability of films containing one or more layers of nylon 6 may be greatly improved by the addition of at least 5% by weight of a copolyamide to the nylon 6. However, the nylon 6/copolyamide blend may contain from about 10% to about 95% by weight of nylon 6 and from about 90% to about 5% by weight of copolyamide. Preferably, the nylon 6/copolyamide blend contains from about 60% to about 95% by weight of nylon 6 and from about 40% to about 5% by weight of copolyamide. Optimally, the blend is from about 85% to about 95% by weight of nylon 6 and from about 15% to about 5% by weight of copolyamide.

The following examples are illustrative of the invention.

Cook-in films having the following layers were prepared by a conventional extrusion process.

| | Layers 1 Sealant | 2 Core | 3 Tie | 4 Barrier | 5 Tie | 6 Abuse |
|---|---|---|---|---|---|---|
| Ex. 1 | EAO-1 (80%) | EVA-1 (80%) | R-AD | PA (90%) | R-AD | EVA-1 (80%) |
| | IONOMER (20%) | EAO-1 (20%) | CPA-1 (10%) | | | EAO-1 (20%) |
| % thickness | 19.77 | 28.25 | 6.21 | 11.30 | 6.21 | 28.25 |
| Ex.2 | EAO-1 (80%) | EVA-1 (80%) | R-AD | PA (90%) | R-AD | EVA-1 (80%) |
| | IONOMER (20%) | EAO-1 (20%) | CPA-1 (10%) | | | EAO-1 (20%) |
| % thickness | 20.71 | 29.59 | 6.51 | 7.10 | 6.51 | 29.59 |
| Ex.3 | EAO-1 (80%) | EVA-1 (80%) | R-AD | PA (90%) | R-AD | EVA-1 (80%) |
| | IONOMER (20%) | EAO-1 (20%) | CPA-1 (10%) | | | EAO-1 (20%) |
| % thickness | 16.75 | 33.49 | 5.26 | 5.74 | 5.26 | 33.49 |
| Ex.4 | EAO-1 (80%) | EVA-1 (80%) | R-AD | PA (90%) | R-AD | EVA-1 (80%) |
| | IONOMER (20%) | EAO-1 (20%) | CPA-1 (10%) | | | EAO-1 (20%) |
| % thickness | 16.13 | 32.26 | 5.07 | 9.22 | 5.07 | 32.26 |
| Ex.5 | EAO-1 (80%) | EVA-1 (80%) | R-AD | PA (90%) | R-AD | EVA-1 (80%) |
| | IONOMER (20%) | EAO-1 (20%) | CPA-1 (10%) | | | EAO-1 (20%) |
| % thickness | 18.41 | 30.67 | 6.45 | 6.45 | 6.45 | 30.67 |
| Ex.6 | EAO-1 (80%) | EVA-1 (80%) | R-AD | PA (90%) | R-AD | EVA-1 (80%) |
| | IONOMER (20%) | EAO-1 (20%) | CPA-1 (10%) | | | EAO-1 (20%) |
| % thickness | 14.78 | 34.48 | 5.42 | 5.42 | 5.42 | 34.48 |
| Ex. 7 | PEC (75%) | R-AD | PA (60%) | EVOH (85%) | R-AD | PEC (75%) |
| | EAO-2 (25%) | | CPA-1 (40%) | EAMA (15%) | | EAO-2 (25%) |
| % thickness | 25.81 | 16.13 | 6.45 | 9.68 | 16.13 | 25.81 |
| Ex. 8 | PEC | R-AD | PA | EVOH | R-AD | PEC |
| | (75%) | | (60%) | (85%) | | (75%) |
| | | | | | | |
| | EAO-2 | | CPA-1 | EAMA | | EAO-2 |
| | (25%) | | (40%) | (15%) | | (25%) |
| | | | | | | |
| % thickness | 24.24 | 15.15 | 12.12 | 9.09 | 15.15 | 24.24 |
| Ex. 9 | PEC | R-AD | PA | EVOH | R-AD | PEC |
| | (75%) | | (60%) | (85%) | | (75%) |
| | | | | | | |
| | | | | | | |
| | EAO-2 | | CPA-2 | EAMA | | EAO-2 |
| | (25%) | | (40%) | (15%) | | (25%) |
| | | | | | | |
| % thickness | 25.81 | 16.13 | 6.45 | 9.68 | 16.13 | 25.81 |
| Ex. 10 | PEC | R-AD | PA | EVOH | R-AD | PEC |
| | (75%) | | (60%) | (85%) | | (75%) |
| | | | | | | |
| | EAO-2 | | CPA-2 | EAMA | | EAO-2 |
| | (25%) | | (40%) | (15%) | | (25%) |
| | | | | | | |
| % thickness | 24.24 | 15.15 | 12.12 | 9.09 | 15.15 | 24.24 |
| Ex. 11 | PEC | R-AD | PA | EVOH | R-AD | PEC |
| | (75%) | | (60%) | (85%) | | (75%) |
| | | | | | | |
| | EAO-2 | | CPA-3 | EAMA | | EAO-2 |
| | (25%) | | (40%) | (15%) | | (25%) |
| | | | | | | |
| % thickness | 24.24 | 15.15 | 12.12 | 9.09 | 15.15 | 24.24 |

In the foregoing Examples the following materials were employed:
- IONOMER: Surlyn 1650 from DuPont, a zinc salt of ethylene methacrylic acid
- EVA-2: Elvax 3128 from DuPont, an ethylene vinyl acetate having 8.9% by weight of vinyl acetate
- PA: 8209F from Allied Signal, a Nylon 6 homopolymer; Examples 1-4 employ 8209FN, the nucleated version of this Nylon 6
- CPA-1: XE 3303 from Emser, a Nylon 66/610 copolymer
- CPA-2: Grilon CF62BSE from Emser, a Nylon 6/69 copolymer
- CPA-3: Grilon CF6S from Emser, a Nylon 6/12 copolymer
- EVOH: Ethylene vinyl alcohol copolymer, Eval LC-E105A sold by Eval of America
- R-AD: Ethylene alpha-olefin polymer Tymor™ 1203, sold by Morton International, Rubber modified and maleic anhydride grafted
- PEC: Fina 8473 from Fina, a propylene ethylene copolymer having 3.1% by weight of ethylene
- EAO-1: ethylene 1-octene copolymer, Dowlex™ 2045 sold by Dow Chemical
- EAO-2: Tafmer A-4085 from Mitsui, an ethylene butene copolymer
- EAMA: Lotader 3200 from Atochem, an ethylene acrylic acid maleic anhydride terpolymer

The cook-in films of Examples 1-10 were all oriented out of hot water at approximately 208°F in a trapped bubble process as described above.

The cook-in films of Examples 1-4 were coated with mineral oil and cook-tested. Three cook-tests were conducted. Sample casings of each film were filled with water, a water/oil mixture, and water massaged ham, respectively, and subjected to standard cook-in conditions. All samples survived the cook-tests and yielded acceptable end products.

The cook-in films of Examples 5 and 6 were coated with mineral oil, shirred and cook-tested. Three cook-tests were conducted. Sample casings of each film were filled with water, a water/oil mixture, and water massaged ham, respectively, and subjected to standard cook-in conditions. All samples survived the cook-tests and yielded acceptable end products.

The foregoing description of preferred embodiments of the invention have been presented for purposes of illustration and description. It is not intended to be exhaustive or to limit the invention to the precise form disclosed, and modifications and variations are possible in light of the above teachings or may be acquired from practice of the invention. The embodiments were chosen and described in order to explain the principles of the invention and its practical application to enable one skilled in the art to utilize the invention in various embodiments and with various modifications as are suited to the particular use contemplated. It is intended that the scope of the invention be defined by the claims appended hereto.

## Claims

1. A process for producing a heat shrinkable, biaxially-oriented multilayer film, comprising:
(a) extruding a tubular multilayer tape comprising:
(i) a first, outer layer comprising a polyolefin,
(ii) a second, core layer comprising a polyamide blend comprising nylon 6 blended with at least about 5% by weight of copolyamide,
(iii) a third layer which is a core layer comprising polyolefin or an oxygen-barrier layer comprising at least one member selected from ethylene/vinyl alcohol copolymer, polyvinylidene chloride copolymer and polyacrylonitrile, and
(iv) a fourth, outer layer comprising a polyolefin
wherein the second polyamide layer comprises less than 15% of the total thickness of the structure; and
(b) inflating the tube so that the tape is biaxially oriented by stretching in a transverse direction and machine direction, so that a tubular multilayer film is formed.

2. A process according to Claim 1, wherein the second layer comprises at least one copolyamide selected from nylon 6/12, nylon 6/69 and nylon 66/610.

3. A process according to Claim 1 or 2, wherein the second layer comprises nylon 6 in an amount of from 10 to 95 percent, based on the weight of the polyamide blend.

4. A process according to Claim 3, wherein the second layer comprises nylon 6 in an amount of from 60 to 95 percent, based on the weight of the polyamide blend.

5. A process according to Claim 4, wherein the second layer comprises nylon 6 in an amount of from 85 to 95 percent, based on the weight of the polyamide blend.

6. A process according to any one of the preceding claims, wherein the tape further comprises a fifth tie layer between the first outer polyolefin layer and second polyamide layer and a sixth tie layer between (a) the second polyamide layer and third core layer comprising polyolefin or (b) third oxygen-barrier layer and the fourth outer polyolefin layer.

7. A process according to Claim 6, wherein the fifth and sixth tie layer comprise anhydride grafted ethylene alpha-olefin copolymer.

8. A process according to any one of the preceding claims, wherein:
the first outer polyolefin layer comprises 20% by weight ethylene alpha-olefin copolymer and 80% by weight ethylene vinyl acetate copolymer;
the third layer is a core polyolefin layer comprising 20% by weight ethylene alpha olefin copolymer and 80% by weight ethylene vinyl acetate copolymer; and
the fourth outer polyolefin layer comprises 80% by weight ethylene alpha-olefin copolymer and 20% by weight ionomer.

9. A process according to any one of Claims 1 to 7 wherein:
the first outer polyolefin layer comprises 75% by weight propylene ethylene copolymer and 25% ethylene alpha-olefin copolymer;
the third layer is an oxygen-barrier layer comprising ethylene vinyl alcohol copolymer; and
the fourth outer polyolefin layer comprises 75% by weight propylene ethylene copolymer and 25% ethylene alpha-olefin copolymer.

10. A process according to any one of the preceding claims, wherein biaxial orientation is carried out at an orientation temperature of from 71 to 138°C (160 to 280°F).

11. A process according to Claim 10, wherein biaxial orientation is carried out at an orientation temperature of from 71 to 96°C (160 to 205 °F).

12. A process according to Claim 11, wherein the tube is heated in hot water immediately before biaxial orientation.

13. A process according to any one of the preceding claims, further comprising the step of coating an outside surface of the tubular multilayer film with oil.

## Patentansprüche

1. Verfahren zur Herstellung einer wärmeschrumpfbaren, biaxialorientierten Mehrschichtfolie, bei dem
(a) ein schlauchförmiges Mehrschichtband extrudiert wird, das
(i) eine erste, äußere Schicht, die Polyolefin umfasst,
(ii) eine zweite Kernschicht, die eine Polyamidmischung umfasst, die Nylon 6 gemischt mit mindestens etwa 5 Gew.% Copolyamid umfasst,
(iii) eine dritte Schicht, die eine Kernschicht ist, die Polyolefin oder eine Sauerstoffbarriereschicht umfasst, die mindestens ein Mitglied ausgewählt aus Ethylen/Vinylalkohol Copolymer, Polyvinylidenchloridcopolymer und Polyacrylnitril umfasst, und
(iv) eine vierte, äußere Schicht umfasst, die Polyolefin umfasst,
wobei die zweite Polyamidschicht weniger als 15% der Gesamtdicke der Struktur ausmacht, und
(b) der Schlauch aufgeblasen wird, sodass das Band durch Streckung in Querrichtung und Maschinenrichtung biaxial orientiert und eine Mehrschichtschlauchfolie gebildet wird.

2. Verfahren nach Anspruch 1, bei dem die zweite Schicht mindestens ein Copolyamid ausgewählt aus Nylon 6/12, Nylon 6/69 und Nylon 66/610 umfasst.

3. Verfahren nach Anspruch 1 oder 2, bei dem die zweite Schicht Nylon 6 in einer Menge von 10-95%, bezogen auf das Gewicht der Polyamidmischung, umfasst.

4. Verfahren nach Anspruch 3, bei dem die zweite Schicht Nylon 6 in einer Menge von 60-95%, bezogen auf das Gewicht der Polyamidmischung, umfasst.

5. Verfahren nach Anspruch 4, bei dem die zweite Schicht Nylon 6 in einer Menge von 85-95%, bezogen auf das Gewicht der Polyamidmischung, umfasst.

6. Verfahren nach einem der vorangehenden Ansprüche, bei dem das Band zusätzlich eine fünfte Verbindungsschicht zwischen der ersten, äußeren Polyolefinschicht und der zweiten Polyamidschicht und eine sechste Verbindungsschicht zwischen (a) der zweiten Polyamidschicht und der dritten, Polyolefin umfassenden Kernschicht oder (b) zwischen der dritten Sauerstoffbarriereschicht und der vierten, äußeren Polyolefinschicht umfasst.

7. Verfahren nach Anspruch 6, bei dem die fünfte und sechste Verbindungsschicht anhydridgepfropftes Ethylen/α-Olefin Copolymer umfasst.

8. Verfahren nach einem der vorangehenden Ansprüche, bei dem die erste äußere Polyolefinschicht 20 Gew.% Ethylen/α-Olefin Copolymer und 80 Gew.% Ethylen/Vinylacetat Copolymer umfasst, die dritte Schicht eine Kernpolyolefinschicht ist, die 20 Gew.% Ethylen/α-Olefin Copolymer und 80 Gew.% Ethylen/Vinylacetat Copolymer umfasst, und die vierte, äußere Polyolefinschicht 80 Gew.% Ethylen/α-Olefin Copolymer und 20 Gew.% Ionomer umfasst.

9. Verfahren nach einem der Ansprüche 1 bis 7, bei dem die erste, äußere Polyolefinschicht 75 Gew.% Propylen/Ethylen Copolymer und 25% Ethylen/α-Olefin Copolymer umfasst, die dritte Schicht eine Sauerstoffbarriereschicht ist, die Ethylen/Vinylalkohol Copolymer umfasst, und die vierte, äußere Polyolefinschicht 75 Gew.% Propylen/Ethylen Copolymer und 25% Ethylen/α-Olefin Copolymer umfasst.

10. Verfahren nach einem der vorangehenden Ansprüche, bei dem die biaxiale Orientierung bei einer Orientierungstemperatur von 71 bis 138°C (160 bis 280°F) durchgeführt wird.

11. Verfahren nach Anspruch 10, bei dem die biaxiale Orientierung bei einer Orientierungstemperatur von 71 bis 96°C (160-205°F) durchgeführt wird.

12. Verfahren nach Anspruch 11, bei dem der Schlauch unmittelbar vor der biaxialen Orientierung in heißem Wasser erwärmt wird.

13. Verfahren nach einem der vorangehenden Ansprüche, bei dem zusätzlich eine äußere Oberfläche der Mehrschichtschlauchfolie mit Öl beschichtet wird.

## Revendications

1. Procédé de production d'un film multicouche biaxialement orienté thermorétractable, comprenant :
(a) l'extrusion d'un ruban multicouche tubulaire comprenant :
(i) une première couche externe comprenant une polyoléfine,
(ii) une deuxième couche d'âme comprenant un mélange de polyamides comprenant du nylon 6 en mélange avec au moins environ 5 % en poids de copolyamide,
(iii) une troisième couche qui est une couche dame comprenant une polyoléfine ou un couche formant barrière contre l'oxygène comprenant au moins un membre sélectionné parmi copolymère d'éthylène/alcool vinylique, copolymère de chlorure de polyvinylidène et polyacrylonitrile, et
(iv) une quatrième couche externe comprenant une polyoléfine.
où la seconde couche de polyamide forme moins de 15 % de l'épaisseur total de la structure, et
(b) le gonflage du tube de façon que le ruban soit biaxialement orienté par étirage en direction transversale et direction de la machine, de façon à former un film multicouches tubulaires,

2. Procédé selon la revendication 1, où la deuxième couche comprend au moins un copolyamide sélectionné parmi nylon 6/12, nylon 6/69 et nylon 66/610.

3. Procédé selon la revendication 1 ou 2, où la seconde couche comprend du nylon 6 en une quantité de 10 à 95 pour cent en se basant sur le poids du mélange de polyamides.

4. Procédé selon la revendication 3, où la deuxième couche comprend du nylon 6 en une quantité de 60 à 95 pour cent en se basant sur le poids du mélange de polyamides.

5. Procédé selon la revendication 4, où la deuxième couche se compose de nylon 6 en une quantité de 85 à 95 pour cent en se basant sur le poids du mélange de polyamides.

6. Procédé selon l'une quelconque des revendications précédentes, où le ruban comprend de plus une cinquième couche d'attache entre la première couche externe de polyoléfine et la deuxième couche de polyamide et une sixième couche d'attache entre (a) la deuxième couche de polyamide et la troisième couche d'âme comprenant la polyoléfine ou (b) une troisième couche formant barrière contre l'oxygène et la quatrième couche externe de polyoléfine.

7. Procédé selon la revendication 6, où les cinquième et sixième couches d'attache comprennent un copolymère d'éthylène alpha-oléfine greffé d'anhydride.

8. Procédé selon une quelconque des revendications précédentes, où :
la première couche de polyoléfine externe comprend 20% en poids d'un copolymère d'éthylène alpha-oléfine et 80% en poids d'un copolymère d'éthylène acétate de vinyle.
la troisième couche est une couche de polyoléfine d'âme comprenant 20% en poids d'un copolymère d'éthylène alpha-oléfine et 80% en poids d'un copolymère d'éthylène acétate de vinyle ; et
la quatrième couche de polyoléfine externe comprend 80% en poids d'un copolymère d'alpha-olfine et 20% en poids d'un ionomère.

9. Procédé selon l'une quelconque des revendications de 1 à 7, où :
la première couche de polyoléfine externe comprend 75% en poids d'un copolymère de propylène éthylène et 25% en poids d'un copolymère d'éthylène alpha-oléfine ;
la troisième couche est une couche formant barrière contre l'oxygène comprenant un copolymére d'éthylène alcool vinylique, et
la quatrième couche de polyoléfine externe comprend 75% en poids d'un copolymère de propylène éthylène et 25% d'un copolymère d'éthylène alpha-oléfine.

10. Procédé selon l'une quelconque des revendications précédentes, où l'orientation biaxiale est effectuée à une température d'orientation de 71 à 138°C (160 à 280° F).

11. Procédé selon la revendication 10, où l'orientation biaxiale est effectuée à une température d'orientation de 71 à 96°C (160 à 205° F).

12. Procédé selon la revendication 11, où le tube est chauffé dans l'eau chaude immédiatement avant orientation biaxiale.

13. Procédé selon l'une quelconque des revendications précédentes, comprenant de plus l'étape d'enduire une surface externe du film multicouche tubulaire d'une huile.
